# EUROPEAN PATENT APPLICATION

(11) **EP 4 283 524 A1**
(43) Date of publication of application: **29.11.2023**
(21) Application number: 23175521.6
(22) Date of filing: 25.05.2023
(51) Int. Cl.: G06N 3/045, G06N 3/0455, G06N 3/0464

(54) **A METHOD FOR PROCESSING TIME SERIES DATA OF DIFFERENT FREQUENCIES AND COMPUTER PROGRAM PRODUCT**

(30) Priority: 26.05.2022 EP 22461555
(71) Applicant: Biz On Spolka Z Ograniczona Odpowiedzialnoscia, 02-320 Warszawa (PL)
(72) Inventor: Roszak, Bartlomiej, 61-036 Pozna (PL); Adamski, Igor, 02-230 Warszawa (PL)
(74) Representative: Bury & Bury

(57) **Abstract**

A method for processing time series data of different frequencies using a convoluted neural networks, with correlated encoders and independent encoders using neural network of various layers depending on frequency of the data source and computer program product therefor.

## Description

### Field of the invention

The invention concerns a method for processing time series data of different frequencies with convoluted neural networks and computer program product. That kind of data is specific for analysis of stock market.

Various models for training neural networks adapted to the analysis of stock market data and financial instrument transactions are known in the art.

### State of the art

US20160371780 discloses a system for predicting changes in financial instruments and transaction recommendations based on multiple data sources.

Article by Shu, Wangwei & Gao, Qiang. (2020) on Forecasting Stock Price Based on Frequency Components by EMD and Neural Networks, discloses a convolutional neural network (CNN) for processing data of various frequencies using empirical model decomposition (EMD) and Long Short-Term Memory (LSTM) .

EP4035113A1 discloses a system for automatic machine learning algorithm adapter for correlating data of various categories.

### Technical problem

There is a gap in proposed architecture of the system adapted for processing the various spectrum of data related to financial instruments. Generally it is difficult to process time series data having wide range of frequencies, differed by more than order of magnitude. This is the case for the financial and stock market data. There is a need for a method including convoluted neural networks adapted to be trained and suitable for processing data of highly different frequencies.

### Solution to the problem

### Summary of the invention

### Brief description of drawings

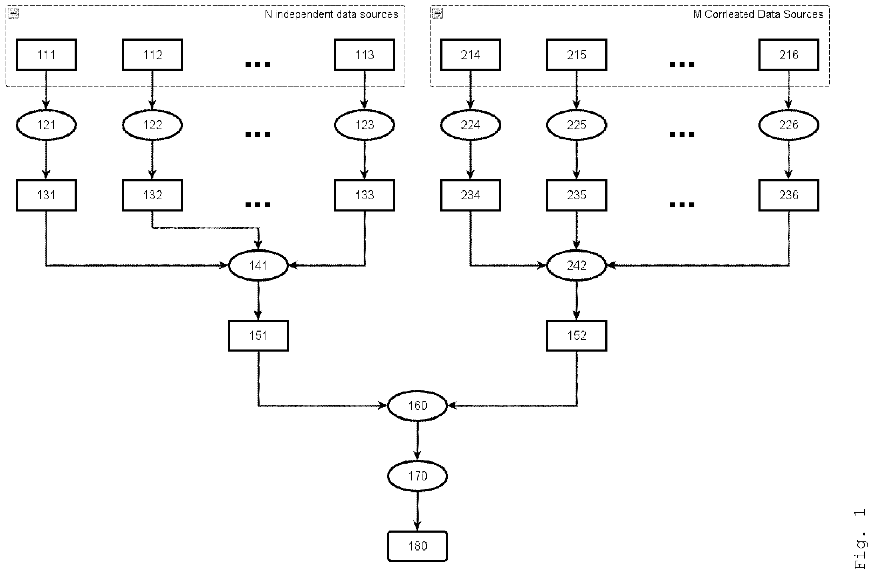

The invention is described below with reference to attached Fig. 1 showing architecture of the modules used in the method, according to the invention.

### Ebodiments of the invention

Fig. 1 shows architectures of the modules used in the method, according to the invention. The modules form a whole system. The method, according to the invention, is adapted to process simultaneously and use for predicting value of financial instruments using N independent data sources and M correlated data sources. These sources are processed separately. Both independent data sources and correlated data sources are classified by frequency of providing data in a form of time series.

In the example given below, minute frequency data, hourly frequency data and daily frequency data are considered. Minute frequency data sources (111,214) provide new values in intervals of c.a. half a minute to couple of minutes, hourly frequency data sources (112, 215) provide data at intervals of half an hour to couple of hours, daily frequency data sources (113, 216) provide data at intervals of half a day to couple of days. These classes of frequency are arbitrary and can be extended also to weekly data sources and monthly data sources, even to annual data sources. However, it is noted, that the inventors checked that for the effective processing, the stock market and financial instruments, minute, hourly and daily data sources are indispensable.

In the discussion of the embodiment below, it is assumed, that minute data sources are sampled every minute, hourly data sources are sampled every hour and daily data sources are sampled every day.

Data from the independent sources are processed with a set of independent model encoders **121, 122, 123.** Data from the correlated data sources are processed with a set of correlated model encoders **224, 225, 226.**

Independent model encoders and correlated model encoders are based on processing modules, adapted for various resolutions, suitable for particular frequency of the data source.

The set of independent model encoders **121, 122, 123** comprises at least: processing module **121** for processing time series data of minute frequency, processing module **122** for processing time series data having hourly frequency and processing module **123** for processing daily frequency.

The set of correlated model encoders **224, 225, 226** comprises at least: processing module **224** for processing time series data of minute frequency, processing module **225** for processing time series data having hourly frequency and processing module for processing daily frequency **226.**

Processing modules **121, 224** for processing time series data having minute frequency have convoluted neural network with 4 to 5 layers.

Processing modules **122, 225** for processing time series data having hourly frequency have convoluted neural network with 3 to 4 layers.

Processing modules **123, 226** for processing time series data having daily frequency have convoluted neural network with 1 to 2 layers.

Outputs of the set of independent model encoders **121, 122, 123** are fed to independent embedding modules **(131, 132, 133.** Outputs of the set of the correlated model encoders **224, 225, 226** are fed to correlated embedding modules **234, 235, 236.**

Outputs of the independent embedding modules are then stacked together **141** to obtain aggregated independent embeddings 151.

Outputs of correlated embedding modules **(234, 235, 236)** are concatenated **242** to obtain total correlated embedding **152** which is then stacked **160** together with the aggregated independent embeddings **(151).** Result of stacking **160** is fed to model decoder **170** to obtain predictions **180** of future data - values of financial assets or wallet.

Financial instrument available on market is referred to as ticker. Model decoder **170** provides prediction for a set of tickers. Data sources **124, 125, 126** may comprise data from more than one ticker. Accordingly the actual task has additional "ticker" dimension that is not explicitly shown in Fig. 1. Consequently, the data of all tickers is analyzed simultaneously and their correlations with each other are automatically taken into account. All input data assigned to a specific ticker is collectively referred to as data and processed by correlated modules.

Data that cannot be linked to a specific ticker include general market data, such as changes in currency pairs, indices, weather, moon phases, etc. are processed in processing modules of independent encoders **121, 122, 123.**

The processing modules **121, 122, 123, 224, 225, 226** have a number of parameters.

Parameter C is a number of layers of convolutional neural network CNN. It has been tested that suitable ranges of values of C are:
i. C C {4,5} for processing minute frequency data
ii. C C {3,4} for processing hourly frequency data
iii. C C {1,2} for processing daily frequency data

Additionally for advantageous efficiency on different ranges of CNN window and Window stride were applied. CNN Window defines size of window applied to the time-series data in analysis while Window stride defines a step of moving a window through the data.

Advantageous ranges of sizes of CNN window were:
- (5, 10) for processing daily frequency data
- (3, 7) for processing hourly frequency data
- (2, 5) for processing daily frequency data

Advantageous ranges of sizes of CNN stride were:
- (2-4) for processing daily frequency data
- (1-3) for processing hourly frequency data
- (1-2) for processing daily frequency data

These parameters are derived from experiments with deep learning, but they also have an intuitive explanation. As can be seen, the parameter values tend to decrease as the resolution of the data increases. On the example of the CNN window, the lower the resolution of the data, the 'slower' the fundamental changes in the patterns of the time series take place - looking at minute data, an hour of activity is 60 points of the time series for us. In this case, to notice significant changes in the formula, a larger window should be used to catch more data points, describing more elapsed time.

For independent embedding **131, 132, 133** and for correlated embedding **234, 235, 236** modules realizing various methods can be used. In the present embodiment embedding modules with Long Short-Term Memory LTSM recursive neural networks are applied.

Applicable embedding size depends on the frequency of the processed data and was:
- lower than 100 for minute frequency data,
- in a range of 100-200 for hourly frequency data,
- higher than 300 for daily frequency data.

A number of suitable layers of the LTSM recursive neural network also depends on the frequency of the data and was:
- 3 or 4 for minute frequency data,
- 2-3 for hourly frequency data,
- 1-2 for daily frequency data.

These parameters are derived from experiments with deep learning, however it makes sense that embedding size needs to be increased when there is more information to store i.e. for higher frequency of the data.

Stacking **151** in processing of independent data is done with straightforward aggregation module stacking together subsequent vectors.

Concatenation **152** in processing of correlated data, is also realized with aggregation modules but it is advisable to use more elaborate approach which requires more elaborate approach including attentive neural network transformers.

The neural networks can be trained in state of the art manner. However, during training ticker data is stored in a manner aggregated by time to enable loading data from all tickers for a given time window faster. Regular loops by tickers are less efficient.

The method, according to the invention, preferably, is computer implemented and can be delivered as computer program product.

The modules utilized in the method, according to the present invention, can be implemented in various forms, including software, Application-Specific Integrated Circuit (ASIC), Field-Programmable Gate Array (FPGA), and other suitable technologies. These implementations offer flexibility and adaptability to different computing environments and user requirements.

In particular, the modules can be implemented as single software product, which may include computer-readable instructions stored on a non-transitory computer-readable medium. Such software modules can be executed on a general-purpose computer system, server, or any other computing device capable of executing software instructions. Examples of software implementations include standalone applications, mobile applications, web applications, and cloud-based applications.

Furthermore, the modules can be offered as a computer program product delivered on a carrier. The carrier may include tangible storage media such as optical discs (e.g., CDs, DVDs), magnetic discs (e.g., hard drives, floppy disks), semiconductor memory (e.g., USB drives, memory cards), or any other suitable storage medium capable of storing and delivering computer-readable instructions.

Additionally, the functionality of the method can be provided as a Software-as-a-Service (SaaS) solution, wherein the functionality is accessible remotely over a network. This can include accessing the modules through a web browser, utilizing cloud computing resources, or connecting to a centralized server offering the method as a service. Specific examples of SaaS delivery include online platforms, remote APIs (Application Programming Interfaces), and virtualized computing environments.

In conclusion, the modules employed in the method, according to the present invention, can be implemented using various technologies, including software, ASIC, FPGA, and other suitable means. These implementations can be delivered as a computer program product on a carrier, accessed remotely through a network as a SaaS solution, or deployed using other forms of software delivery mechanisms. Such versatility allows for widespread adoption and efficient utilization of the method across diverse computing environments and user scenarios.

## Claims

1. A method for processing time series data of different frequencies, using a convoluted neural networks, comprising steps of
receiving with a set independent model encoders comprising processing modules **(121, 122, 123)** for processing time series data from independent data sources **(111, 112, 113)**
receiving with a set of correlated model encoders comprising processing modules **(224, 225, 226)** for processing time series data from correlated data sources **(214, 215, 216),**
feeding outputs of the set of independent model encoders **(121, 122, 123)** to independent embedding modules **(131, 132, 133)**
feeding outputs of the set of the correlated model encoders **(224, 225, 226)** to correlated embedding modules **(234, 235, 236)**
stacking **(141)** the data from the independent embedding modules **(131, 132, 133)** to obtain aggregated independent embeddings **(151)**
concatenating **(242)** outputs of correlated embedding modules **(234, 235, 236)** and stacking **(160)** together with the aggregated independent embeddings **(151)** and
feeding the result to model decoder **(170)** to obtain predictions **(180),**
wherein
the set of independent model encoders **(121, 122, 123)** comprises at least: processing module **(121)** for processing time series data of minute frequency, processing module **(122)** for processing time series data having hourly frequency and processing module for processing daily frequency **(123),**
the set of correlated model encoders **(224, 225, 226)** comprises at least: processing module **(224)** for processing time series data of minute frequency, processing module **(225)** for processing time series data having hourly frequency and processing module for processing daily frequency **(226),**
wherein
processing modules **(121, 224)** for processing time series data having minute frequency have convoluted neural network with 4 to 5 layers
processing modules **(122, 225)** for processing time series data having hourly frequency have convoluted neural network with 3 to 4 layers
processing modules **(123, 226)** for processing time series data having daily frequency have convoluted neural network with 1 to 2 layers.

2. Computer program product adapter to execute method, as defined in claim 1.
